# EUROPÄISCHE PATENTSCHRIFT

(11) **EP 1 995 994 B1**
(45) Veröffentlichungstag und Bekanntmachung des Hinweises auf die Patenterteilung: **28.03.2012**
(21) Anmeldenummer: 07010204.1
(22) Anmeldetag: 23.05.2007
(51) Int. Cl.: H05B 3/42, B29C 45/27

(54) **Elektrische Heizeinrichtung**
Electric heating device
Dispositif de chauffage électrique

(43) Veröffentlichungstag der Anmeldung: 26.11.2008
(73) Patentinhaber: GC-Heat Gebhard & Castiglia GmbH & Co. KG, 51545 Waldbröl (DE)
(72) Erfinder: Castiglia, Giacinto, 58509 Lüdenscheid (DE); Schwan, Hubert, 57537 Wissen (DE)
(74) Vertreter: Müller-Gerbes Wagner Albiger Patentanwälte

(56) Entgegenhaltungen:
- US-A- 6 163 016

## Beschreibung

Die Erfindung betrifft eine Heizeinrichtung zum außenseitigen Beheizen eines rohrförmigen Bauteiles, umfassend ein am Bauteilumfang anlegbares verdichtetes elektrisches Heizelement und ein unter Zwischenlage des Heizelementes außenseitig auf das Bauteil aufschiebbares axial geschlitztes Mantelrohr, mittels dessen das Heizelement auf dem Bauteil festspannbar ist, wobei das Mantelrohr an seinen beiden axialen Enden mit Ringen ausgerüstet ist.

Derartige Heizeinrichtungen sind vielfältig bekannt und werden beispielsweise in Form einer Wendelrohrpatrone auf die Spritzdüsen von Spritzgieß- oder Druckgusswerkzeugen oder dergleichen beheizbaren zylindrischen Bauteile aufgebracht, um die gewünschte Beheizung dieses Bauteiles im Betrieb sicherzustellen. Das Mantelrohr stellt hierbei ein Anpresselement dar, um das verdichtete Heizelement an die Oberfläche des zu beheizenden Bauteiles anzupressen und einen guten Wärmeübergang sicherzustellen.

Aus der DE 103 56 059 A1 ist eine Heizeinrichtung mit einem verdichteten Heizelement sowie einer außenseitig auf das Heizelement aufbringbaren Spannhülse bekannt. Das Heizelement ist in Bezug auf das Bauteil mit einem gewissen Untermaß gefertigt und wird unter radialer Aufweitung auf das Bauteil aufgeschoben. Sodann wird mittels eines Aufweitwerkzeuges die Spannhülse aufgeweitet und über das Bauteil und das Heizelement gestülpt und federt anschließend infolge der innewohnenden Federkräfte elastisch zurück, so dass eine Festklemmung des Heizelementes unter gleichzeitiger Sicherstellung eines guten Wärmeüberganges bewirkt wird.

Aus der US-A-6163016 ist eine gattungsgemäße Heizeinrichtung bekannt, bei der das Mantelrohr mittels endseitig vorgesehener Ringe auf dem Bauteil gesichert wird. Die Ringe werden mittels auf dem Bauteil und dem Ring aufgebrachter Gewindeprofilierungen befestigt, was nicht nur bei der Herstellung aufwendig ist, sondern auch die Montage erschwert und insoweit verbesserungswürdig erscheint. Außerdem wird durch die Ringe nur eine endseitige Anpressung des Heizelementes auf dem Bauteil bewirkt.

Aufgabe der vorliegenden Erfindung ist es daher, eine Heizeinrichtung der eingangs genannten Art vorzuschlagen, die sich besonders einfach montieren lässt und eine wirkungsvolle Beheizung des Bauteiles ermöglicht.

Zur Lösung der gestellten Aufgabe wird erfindungsgemäß die Ausbildung einer Heizeinrichtung gemäß den Merkmalen des Patentanspruches 1 vorgeschlagen.

Vorteilhafte Ausgestaltungen und Weiterbildungen der Erfindung sind Gegenstand der abhängigen Ansprüche.

Der erfindungsgemäße Vorschlag sieht vor, die Ringe in Bezug auf das Mantelrohr radial nach innen vorstehen zu lassen und jeweils mit einem axialen Schlitz auszubilden, so dass die Heizeinrichtung unter radialer Aufweitung auf das Bauteil aufschiebbar ist.

Hierdurch wird die Montage erheblich vereinfacht, da ohne Zuhilfenahme von Werkzeugen die Heizeinrichtung lediglich auf das Bauteil mit einem vertretbaren Kraftaufwand aufgeschoben werden kann und sogleich fertig montiert ist. Insofern ist auch die Herstellung der erfindungsgemäßen Heizeinrichtung erheblich vereinfacht, denn auf die Anbringung von Gewindegängen auf dem Bauteil und/oder den Ringen kann vollständig verzichtet werden.

Da die Montage der Heizeinrichtung ohne Zuhilfenahme von Werkzeugen auskommt, wird bauteilseitig kein Montageraum für die Werkzeuge benötigt, so dass sich die erfindungsgemäße Heizeinrichtung durch eine besonders kompakte Bauweise auszeichnet und die erfindungsgemäße Heizeinrichtung kann auch bei längeren zu beheizenden Bauteilen, etwa langen Spritzgussdüsen von der Düsenöffnung her durch simples Aufschieben montiert werden, was außerordentlich wünschenswert ist.

Die radial in Bezug auf das Mantelrohr nach innen vorstehenden Ringe zentrieren die Heizeinrichtung auf dem Bauteil und verhindern eine axiale Verschiebung zwischen Heizelement und Mantelrohr während des axialen Aufschiebens auf das Bauteil bzw. in Umkehrung bei axialem Abziehen vom Bauteil zum Zwecke der Demontage.

Gemäß einem weiteren Vorschlag der Erfindung ist das mit einem durchgehenden axialen Schlitz versehene Mantelrohr mit den Ringen endseitig verbunden, so dass es bei dem Aufschieben der Ringe bei deren radialer Aufweitung ebenfalls eine radiale Aufweitung erfährt und nachfolgend das zwischen Mantelrohr und Bauteil positionierte verdichtete Heizelement infolge der sich einstellenden elastischen Rückstellkräfte anzupressen vermag und guten Wärmeübergang sicherstellt.

Nach einem besonders bevorzugten Vorschlag der Erfindung ist die Heizeinrichtung als vorverbundene Baueinheit aus Heizelement, Mantelrohr und den Ringen ausgebildet, so dass eine montagefertige Einheit geschaffen wird, die durch Aufschieben auf das Bauteil unter radialer Aufweitung montiert und mit dem Bauteil gleichzeitig verbunden wird. Der Montageaufwand auf das zu beheizende Bauteil wird somit enorm verringert.

Je nach Anwendungsfall kann der Innendurchmesser der Ringe im Verhältnis zum Heizelement unterschiedlich gewählt werden.

In jedem Fall beschreibt der Verlauf des verdichteten Heizelementes in unmontiertem Zustand die Hülle eines zylinderförmigen Raumes, der im montierten Zustand vom zu beheizenden rohrförmigen, zylindrischen Bauteil eingenommen wird. Der Verlauf des verdichteten Heizelementes kann z.B. wendelförmig oder mäanderförmig gewählt sein. Der Durchmesser der vom verdichteten Heizelement in unmontiertem Zustand definierten zylindrischen Hülle sollte etwa 0,5 bis 5 % kleiner als der Durchmesser des zu beheizenden Bauteiles sein, so dass das Heizelement beim Aufschieben auf das Bauteil eine radiale Aufweitung erfährt und ein guter Wärmeübergang sichergestellt wird.

Wird nun nach einem ersten Vorschlag der Erfindung der Innendurchmesser der Ringe gleich dem Durchmesser der vom verdichteten Heizelement in unmontiertem Zustand definierten zylindrischen Hülle gewählt, so erfahren Ringe und Heizelement beim Aufschieben auf das Bauteil die gleiche radiale Aufweitung und die Ringe klemmen auf der Oberfläche des Bauteiles.

Nach einem alternativen Vorschlag der Erfindung kann jedoch der Innendurchmesser der Ringe auch geringfügig größer als der Durchmesser der vom verdichteten Heizelement in unmontiertem Zustand definierten Hülle gewählt werden, z.B. etwa 0,1 bis 0,5 mm größer. In Bezug auf den Durchmesser des zu beheizenden Bauteiles sind auch die Ringe bevorzugt, jedoch nicht notwendigerweise mit einem geringen Untermaß ihres Durchmessers gefertigt. In diesem Falle dienen die vorzugsweise mit dem axial durchgängig geschlitzten Mantelrohr fest verbundenen, z.B. verlöteten oder verschweißten Ringe nur als Aufschiebhilfe, d.h. sie bewirken bei ihrem radialen Aufweiten während des Aufschiebens auf das Bauteil eine Voraufweitung des Mantelrohres und verhindern ein axiales Ausweichen des Heizelementes. Bei weiterem Aufschieben erfährt sodann das Heizelement seine entsprechende Aufweitung, bis letztlich die gesamte Heizeinrichtung auf das Bauteil aufgeschoben ist. In diesem montierten Zustand besteht jedoch nur zwischen dem verdichteten Heizelement und dem Bauteil ein Oberflächenkontakt.

Die Ringe der erfindungsgemäßen Heizeinrichtung legen demgemäß die axiale Position des verdichteten Heizelementes innerhalb des Mantelrohres fest und verhindern eine Verschiebung desselben relativ zum Mantelrohr während des axialen Aufschiebens bzw. Abziehens der Heizeinrichtung auf das bzw. von dem Bauteil.

Mit Vorteil sind die Ringe zumindest an ihren einander abgewandten Seiten mit einem Innenkonus ausgebildet, der beispielsweise eine Abschrägung von 30° aufweisen kann, um das Aufschieben und Aufweiten der Ringe auf das zu beheizende Bauteil zu erleichtern. Bevorzugt ist an beiden Enden der Ringe ein solcher Innenkonus angebracht.

Die Ringe sind nach einem Vorschlag der Erfindung aus einem Metall hergestellt, wobei insbesondere Messinglegierungen als geeignet angesehen werden. Anstelle von Messing können auch andere Materialien eingesetzt werden.

Ein solches metallisches Material, welches sich zugleich auch für die Ausbildung des Mantelrohres eignet, weist bevorzugt eine Zugfestigkeit Rₘ bei 500°C von mindestens 650 N/mm² auf, so dass es auch bei hoher Wechseltemperaturbelastung, bedingt durch Aufheiz- und Abkühlvorgänge seine federelastischen Eigenschaften nicht verliert und insbesondere bei zu erwartenden Temperaturen um 500°C diese Eigenschaften während der vorgesehenen Betriebsdauer von mindestens 10.000 Stunden behält.

Weiter bevorzugt weist das Material der Ringe und/oder des Mantelrohres eine Zugfestigkeit Rₘ bei 20°C von mehr 900 N/mm² und eine Dehngrenze R_{p0,2} von mehr als 850 N/mm² auf.

Nach einem weiteren Vorschlag der Erfindung kann das Material der Ringe und/oder des Mantelrohres eine Bruchdehnung kleiner 20 % sowie eine Wärmeausdehnung bei 400°C von weniger als 17 x 10⁻⁶ K⁻¹ aufweisen, was z.B. durch Verwendung von INOCELL alloy 718 gewährleistet ist.

In besonders vorteilhafter Ausgestaltung der Erfindung ist zudem vorgesehen, dass das Material der Ringe und/oder des Mantelrohres zunderbeständig ist und Federeigenschaften aufweist, eine Zugfestigkeit Rₘ und eine Dehngrenze R_{p0,2} bei 20°C aufweist, die annähernd gleich groß ist bzw. eine Zugfestigkeit Rₘ aufweist, die maximal 30 % größer als die Dehngrenze R_{p0,2} bei 20°C ist.
Derartige Materialien können beispielsweise von ausscheidungshärtbaren Nikkel-Chrom-Eisenlegierungen gebildet werden, umfassend Anteile an Ni in einem Bereich von etwa 50,0 % bis 55,0 %, an Cr in einem Bereich von etwa 17,0 % bis 21,0 %, an C in einem Bereich von etwa 0,02 % bis 0,08 %, an Mn in einem Bereich von etwa 0 % bis 0,35 %, an Si in einem Bereich von etwa 0 % bis 0,35 %, Cu in einem Bereich von etwa 0 % bis 0,20 %, Mo in einem Bereich von etwa 2,80 % bis 3,30 %, Co in einem Bereich von etwa 0 % bis 1,0 %, Mb in einem Bereich von etwa 4,75 % bis 5,5 %, Al in einem Bereich von etwa 0,20 % bis 0,80 %, Ti in einem Bereich von etwa 0,65 % bis 1,15 %, B in einem Bereich von etwa 0,002 % bis 0,006 %, P in einem Bereich von etwa 0 % bis 0,0015 %, S in einem Bereich von etwa 0 % bis 0,010 %, wobei der Rest durch Fe gebildet ist, bezogen auf die gesamte Legierung.

Ein besonders geeigneter Werkstoff für die Ringe und/oder das Mantelrohr ist beispielsweise INOCELL alloy 718 (deutsche Werkstoffnorm Nr.: 2.4668). Ausserdem sind geeignet INOCELL alloy X-750 (deutsche Werkstoffnorm Nr.: 2.4669), Titan (deutsche Werkstoffnorm Nr.: 3.7164), Titan (deutsche Werkstoffnorm Nr.: 3.7184), INOCELL alloy 751 (deutsche Werkstoffnorm Nr.: 2.2494), INOCELL alloy A-286 (deutsche Werkstoffnorm Nr.: 1.4980), INOCELL alloy 80A (deutsche Werkstoffnorm Nr.: 2.4631 und 2.4952), INOCELL alloy 90 (deutsche Werkstoffnorm Nr.: 2.4632 und 2.4969), INOCELL alloy 101, INOCELL alloy 105 (deutsche Werkstoffnorm Nr.: 2.4634), INOCELL alloy 115 (deutsche Werkstoffnorm Nr.: 2.4636), INOCELL alloy 263 (deutsche Werkstoffnorm Nr.: 2.4650), INOCELL alloy PE 16 und INOCELL alloy D 979. Ferner sind geeignet hochwarmfeste Nickel-Basislegierungen, wie INOCELL alloy 601H (deutsche Werkstoffnorm Nr.: 2.4851) und INOCELL alloy 800H (deutsche Werkstoffnorm Nr.: 1.4876).

In einer vorteilhaften Ausgestaltung der erfindungsgemäßen Heizeinrichtung wird vorgeschlagen, dass das Heizelement zumindest in Teilbereichen, die am rohrförmigen Bauteil anlegbar sind, einen mäanderförmigen Verlauf aufweist. Durch diesen mäanderförmigen Verlauf lässt sich insbesondere auch bei größeren Durchmessern des zu beheizenden rohrförmigen Bauteiles ein guter Wärmekontakt und damit Wärmeübergang zum Bauteil sicherstellen, wobei gleichzeitig nur geringe äußere radiale Anpresskräfte zum Andrücken und Sicherstellen des Wärmeübergangs zwischen Heizelement und zu beheizendem Bauteil benötigt werden. Selbstverständlich ist es jedoch im Rahmen der Erfindung auch möglich, das Heizelement in bekannter Weise wendelförmig umlaufend um das zu beheizende Bauteil anzuordnen.

Das Heizelement kann ferner in diskreten, z.B. den Ringen benachbarten Abschnitten zu Heizzonen geformt sein, das heißt, z.B. in benachbarten Bereichen zu den Ringen einen mäanderförmig gebogenen Verlauf aufweisen, wobei diese Heizzonen von einer dazwischen liegenden unbeheizten Zone beabstandet sein können. Auf diese Weise ist es möglich, den für eine gleichförmige Beheizung kritischen Endbereichen des Bauteiles, etwa einer Spritzdüse, eine intensive Wärmezufuhr zu verleihen, während der durch Wärmestauungen ohnehin umfangreich beheizte dazwischen liegende Teil von einer aktiven Beheizung ausgespart wird, so dass sich eine gewünschte gleichmäßige Beheizung des gesamten Bauteiles über dessen axiale Erstreckung einstellt.

Es sollte jedoch bemerkt werden, dass infolge der bei Ausbildung mit nur einem Heizelement auch über die unbeheizte Zone verlaufenden geradlinigen Teilabschnitte dieses Heizelementes von der einen Heizzone zur anderen Heizzone eine geringe Beheizung der unbeheizten Zone stattfindet, jedoch in deutlich verringertem Maße, als es in den Heizzonen der Fall ist, in denen das Heizelement mit seinem verdichteten Heizdraht dem Verlauf der Oberfläche des zu beheizenden Bauteiles folgend wendelförmig oder insbesondere mäanderförmig verlaufend angeordnet ist. Durch entsprechenden Verlauf des Heizelementes kann auch eine vollständig unbeheizte Zone zwischen zwei Heizzonen ausgebildet werden.

Denkbar wäre auch, jede Heizzone von einem separaten Heizelement auszubilden, die in einem gemeinsamen Mantelrohr zwischen den Ringen gehaltert sind, wodurch die dazwischenliegende unbeheizte Zone ebenfalls vollständig unbeheizt wäre und überdies eine unterschiedliche Steuerung und Temperierung der Heizzonen möglich wäre.

Durch die vorzugsweise geradlinig verlaufenden Verbindungsteilabschnitte des Heizelementes zwischen den beheizten Zonen wird das Heizelement innerhalb des Mantelrohres beim Aufschieben auf das rohrförmige Bauteil zentriert, wobei nach einem weiteren Vorschlag der Erfindung zusätzlich auch mindestens eine die Heizzonen verbindende Haltestange vorgesehen sein kann, die zwar mit den Heizzonen verbunden, jedoch nicht selbst aktiv beheizt, d.h. nicht mit einem stromdurchflossenen Heizdraht versehen ist. Die Haltestange dient demnach nur der Stabilisierung und/oder Zentrierung des Heizelementes auf dem zu beheizenden Bauteil und kann beispielsweise endseitig mit Heizelementbereichen innerhalb der Heizzonen verbunden, beispielsweise verlötet sein.

Weiterhin kann im Rahmen der Erfindung vorgesehen sein, dass die Heizeinrichtung auch einen Temperatursensor aufweist, mittels dessen die am Bauteil anliegende Temperatur gemessen und einer Steuerungs- und Regeleinrichtung zugeführt werden kann, um die Heizeinrichtung entsprechend anzusteuern.

Der Temperatursensor kann nach einem Vorschlag der Erfindung beispielsweise in das Heizelement integriert sein.

Andererseits ist es auch möglich, den Temperatursensor im Spalt des Mantelrohres anzuordnen, wobei bei dieser Anordnung sowohl eine Befestigung durch ein zusätzliches C-Rohr nach Art eines Clips oder durch ein temperaturbeständiges Klebeband am Mantelrohr vorgesehen sein kann, wie auch die Ausführung mit Befestigung an einem der Ringe beispielsweise in Ringthermoausführung vorgesehen sein kann.

Weitere Ausgestaltungen und Einzelheiten der Erfindung werden nachfolgend anhand von Ausführungsbeispielen in der Zeichnung näher erläutert. Es zeigen:
- Figur 1: die Seitenansicht einer erfindungsgemäßen Heizeinrichtung,
- Figur 2: die Heizeinrichtung gemäß Figur 1 mit abgenommenem Mantelrohr,
- Figur 3: die Einzelheit X in Figur 1 in vergrößerter Darstellung,
- Figur 4: die Vorderansicht des Heizelementes gemäß Figur 1, jedoch ohne Ringe,
- Figur 5: eine weitere Ausführungsform einer erfindungsgemäßen Heizeinrichtung mit einem Temperatursensor,
- Figur 6: die Einzelheit Y in Figur 5 in vergrößerter Darstellung,
- Figur 7: das Heizelement der Heizeinrichtung gemäß Figur 2 in der Abwicklung in eine Ebene,
- Figur 8: die Aufsicht auf den Ring der erfindungsgemäßen Heizeinrichtung,
- Figur 9: einen Teilschnitt durch den Ring gemäß Figur 8.

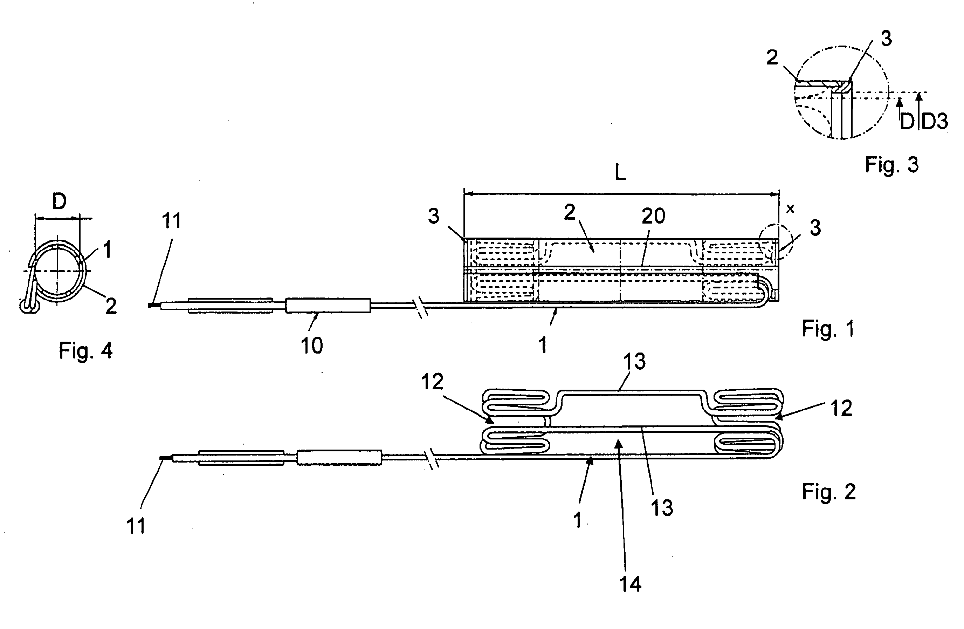

In der Figur 1 ist eine Heizeinrichtung zum außenseitigen Beheizen eines nicht dargestellten rohrförmigen, insbesondere zylindrischen Bauteiles, etwa einer Düse eines Spritzgusswerkzeuges dargestellt.

Die Heizeinrichtung umfasst ein an sich bekanntes verdichtetes elektrisches Heizelement 1 mit Anschlussenden 11 und einem Anschlusskopf 10, wobei die der Beheizung dienenden Längenabschnitte des Heizelementes 1 unter Ausbildung von zwei diskreten Heizzonen 12 in diesen einen mäanderförmigen Verlauf aufweisen und an die zylindrische Form und den Durchmesser des zu beheizenden Bauteiles angepasst sind. Die beiden Heizzonen 12 sind durch eine unbeheizte Zone 14 voneinander beabstandet, in welcher sich lediglich Verbindungsteilabschnitte 13 des Heizdrahtes 1 geradlinig erstrecken, so dass in dieser Zone 14 nahezu keine Beheizung stattfindet. Die Ausbildung der Heizzonen 12 wird anhand des Wärmebedarfs des zu beheizenden Bauteiles festgelegt.

Das Heizelement 1 hüllt demgemäß im dargestellten unmontierten Zustand einen zylindrischen Raum ein, der den aus Figur 4 ersichtlichen Durchmesser D aufweist.

Ferner umfasst die Heizeinrichtung ein das solchermaßen geformte Heizelement 1 im Bereich der beiden Heizzonen 12 und der unbeheizten Zone 14 überspannendes zylindrisches Mantelrohr 2 beispielsweise aus einer der eingangs erwähnten Chrom-Nickellegierungen, welches einen axial durchgehenden Schlitz 20 aufweist und an seinen beiden Enden mit ebenfalls axial geschlitzten Ringen 3 z.B. aus einer Messinglegierung versehen ist.

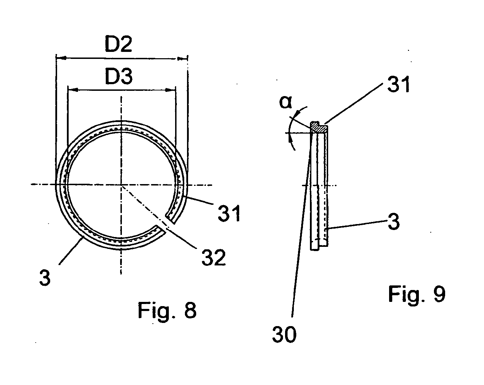

Wie in weiteren Einzelheiten aus der Figur 3 ersichtlich, ist das Mantelrohr 2 mit den endseitig vorgesehenen Ringen 3 als Einheit fest verbunden, z.B. verlötet, wozu die beiden Ringe 3 jeweils einen stufenförmigen Absatz 31 als Auflager für das axiale Ende des Mantelrohres 2 aufweisen. Der aus Figur 8 ersichtliche Außendurchmesser D2 der Ringe 3 entspricht dem des Mantelrohres 2.

Auch das vorangehend beschriebene Heizelement 1 mit seinem zur Ausbildung der Heizzonen 12 mäanderförmig gebogenen und von geradlinigen Verbindungsabschnitten 13 zur Ausbildung der unbeheizten Zone 14 beabstandeten Teilabschnitten ist mit dem Mantelrohr 2 und den endseitig vorgesehenen Ringen 3 fest verbunden, so dass die aus der Figur 1 ersichtliche noch nicht aufgeschobene Heizeinrichtung eine vormontierte Baueinheit darstellt, die ohne Zuhilfenahme weiterer Einzelteile oder Werkzeuge montagefertig ist.

Hierbei weist das Heizelement 1 im Bereich der Heizzonen 12 einen Innendurchmesser D gemäß Figur 4 bzw. 8 auf, der etwa 0,5 bis 5 % kleiner als der Außendurchmesser des zu beheizenden Bauteiles ausgeführt ist.

Wie insbesondere aus der Darstellung gemäß Figur 3 ersichtlich, ist der Innendurchmesser D3 der Ringe 3 größer, z.B. um 0,1 bis 0,5 mm als der Durchmesser D des Heizelementes 1 in unmontiertem Zustand ausgeführt, jedoch gleichwohl noch mit einem gewissen Untermaß zum Durchmesser des zu beheizenden Bauteiles.

Bei axialem Aufschieben der Heizeinrichtung mit ihrer gesamten Länge L auf das zu beheizende Bauteil erfährt somit zunächst einer der endseitig vorgesehenen Ringe 3 infolge seines Untermaßes eine radiale Aufweitung, die durch Ausbildung mit dem axialen Schlitz 32, siehe Figur 8, ermöglicht ist. Nachfolgend wird dann das Heizelement 1 aufgeschoben und erfährt ebenso wie das mit einem axialen Schlitz 20 versehene Mantelrohr 2 eine radiale Aufweitung, bis letztlich auch der zweite Ring 3 aufgeschoben ist. In diesem montierten Zustand steht sodann nur noch das Heizelement 1 mit dem Bauteil in oberflächlichem Kontakt, während gleichzeitig das Mantelrohr 2 den gewünschten radialen Anpressdruck zwischen Heizelement 1 und der Oberfläche des Bauteiles sicherstellt.

Während des Aufschiebens auf das Bauteil verhindern die Ringe 3, dass das Heizelement 1 sich axial in Bezug auf das Mantelrohr 2 verlagert. Gleiches gilt bei der Demontage durch axiales Abziehen vom Bauteil.

Infolge des mäanderförmigen Verlaufes der Heizzonen 12 des Heizelementes 1 ist im montierten Zustand des Heizelementes 1 ein intensiver Wärmekontakt zum Bauteil sichergestellt, und an die vom Mantelrohr 2 auszuübenden Anpresskräfte werden nur geringe Anforderung gestellt.

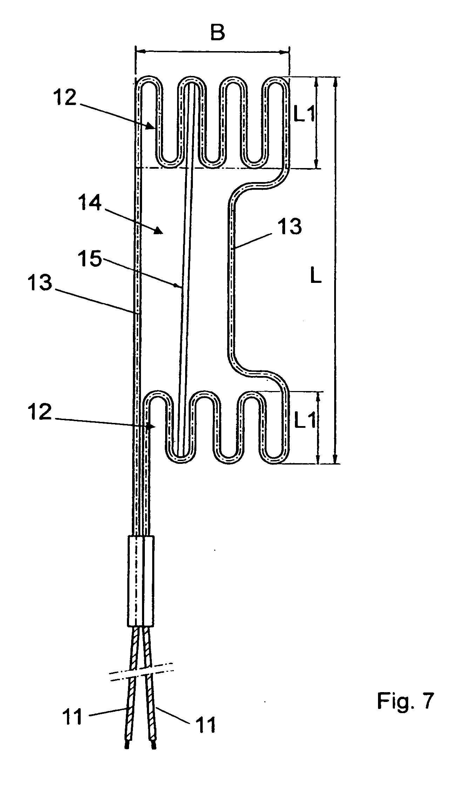

Darüber hinaus zentrieren beim Aufschieben der Heizeinrichtung auf das Bauteil die geradlinigen Verbindungsteilabschnitte 13 des Heizelementes 1 dieses innerhalb des Mantelrohres 2 und auf dem zu beheizenden Bauteil, wobei dies ferner, wie aus der Figur 7 ersichtlich, noch durch zusätzliche unbeheizte und beispielsweise endseitig in die einzelnen Heizzonen 12 eingelötete Haltestangen 15 ergänzt werden kann. Diese Haltestangen 15 verleihen dem Heizelement 1 zusätzlich die nötige Stabilität.

Es versteht sich, dass in Anpassung an das zu beheizende Bauteil die Gesamtlänge des Heizelementes L, die Länge L1 der beiden beheizten Zonen 12 wie auch die Länge der sich hieraus ergebenden dazwischen liegenden unbeheizten Zone 14 und die Breite B in der Abwicklung (siehe Figur 7) entsprechend dem Durchmesser des zu beheizenden Bauteiles vom Fachmann frei festgelegt werden kann.

Um das Aufschieben der Ringe 3 auf das zu beheizende Bauteil zu erleichtern, weisen diese, wie aus Figur 9 ersichtlich, einen Innenkonus 30 mit einem Konuswinkel α von beispielsweise 30° auf, der ein- oder beidseits der Ringenden ausgebildet sein kann.

Ferner erkennt man insbesondere aus der Detaildarstellung gemäß Figur 3, dass die Ringe 3 bezogen auf das Mantelrohr 2 radial nach innen vorstehen, so dass über diesen Betrag des radialen Überstandes nach innen genügend Raum verbleibt, um hier die Windungen des Heizelementes 1 anzuordnen, damit die Windungen später durch das geschlitzte Mantelrohr 2 nach innen auf das zu beheizende Bauteil angepresst werden und das Heizelement 1 zuverlässig in seiner Position innerhalb des Mantelrohres 2 gehalten wird.

Selbstverständlich ist es in Abwandlung der in den Zeichnungen dargestellten Ausführungsbeispiele auch möglich, das Heizelement 1 wendelförmig um das zu beheizende Bauteil umlaufend auszubilden oder auch mehr als zwei Heizzonen 12 oder auch nur eine durchgängige Heizzone 12 auszubilden.

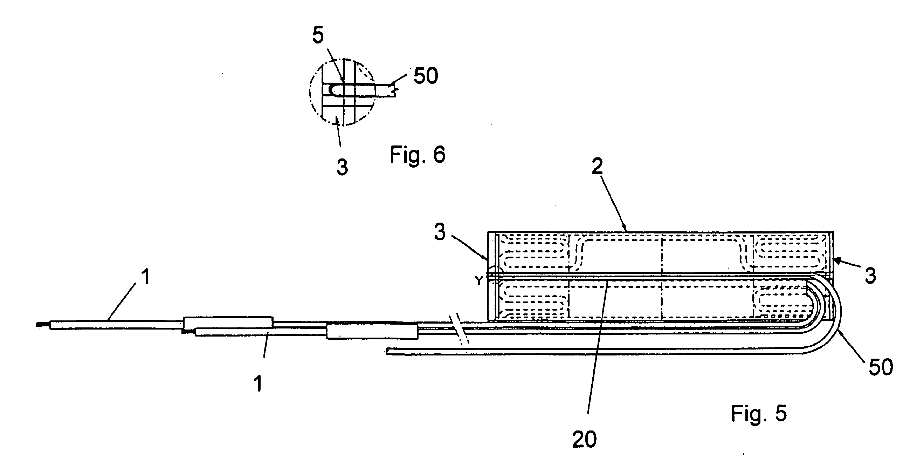

Im Ausführungsbeispiel gemäß Figur 5 ist eine Abwandlung zum Ausführungsbeispiel gemäß Figur 1 dargestellt, bei dem gleiche Teile mit gleichen Bezugsziffern versehen sind und zur Vermeidung von Wiederholungen nicht nochmals gesondert erläutert werden, sofern dies nicht zum Verständnis der Erfindung erforderlich ist.

Wesentliches Unterscheidungsmerkmal der Ausgestaltung gemäß Figur 5 ist es, dass zusätzlich ein Temperaturfühler 5 vorgesehen ist, der über eine Messleitung 50 zum Anschluss eine Mess-, Steuer- oder Regeleinrichtung verfügt. Der Temperaturfühler 5 liegt innerhalb des axialen Schlitzes 20 des Mantelrohres 2 und ist mit seinem Messkopf mit einem der Ringe 3 verbunden, so dass auch hier eine dauerhaft fest verbundene Baugruppe geschaffen wird.

Mittels des Temperaturfühlers 5 ist eine fortlaufende Überwachung und Steuerung der Bauteiltemperatur möglich, indem z.B. das Heizelement 1 messwertabhängig angesteuert wird.

Es ist offensichtlich, dass sich die vorangehend erläuterte Heizeinrichtung ohne Zuhilfenahme weiteren Werkzeuges durch simples Aufschieben auf das zu beheizende Bauteil befestigen lässt, d.h. festklemmt, so dass keinerlei Freiraum für den Eingriff von Werkzeugen vorgesehen sein muss und die Heizeinrichtung auch bei sehr langen zylindrischen Bauteilen, beispielsweise langen Spritzgussdüsen von der Düsenaustrittsöffnungsseite her durch Aufschieben befestigt werden kann. Auch die Demontage kann durch in entgegengesetzter Richtung bewirktes axiales Abziehen vom Bauteil in gleicher einfacher Weise bewirkt werden.

Durch die weitgehende Vorfertigung als komplette Baugruppe wird neben der Montage der erfindungsgemäßen Heizeinrichtung auf dem zu beheizenden Bauteil auch deren Handhabung vereinfacht.

## Patentansprüche

1. Heizeinrichtung zum außenseitigen Beheizen eines rohrförmigen Bauteiles, umfassend ein am Bauteilumfang anlegbares verdichtetes elektrisches Heizelement (1) und ein unter Zwischenlage des Heizelementes (1) außenseitig auf das Bauteil aufschiebbares axial geschlitztes Mantelrohr (2), mittels dessen das Heizelement (1) auf dem Bauteil festspannbar ist, wobei das Mantelrohr (2) an seinen beiden axialen Enden mit Ringen (3) ausgerüstet ist, **dadurch gekennzeichnet, dass** die Ringe (3) in Bezug auf das Mantelrohr (2) radial nach innen vorstehen und jeweils mit einem axialen Schlitz (32) ausgebildet sind und die Heizeinrichtung unter radialer Aufweitung auf das Bauteil aufschiebbar ist.

2. Heizeinrichtung nach Anspruch 1, **dadurch gekennzeichnet, dass** das Mantelrohr (2) mit den Ringen (3) endseitig verbunden ist.

3. Heizeinrichtung nach Anspruch 1 oder 2, **dadurch gekennzeichnet, dass** sie als vorverbundene Baueinheit aus Heizelement (1), Mantelrohr (2) und den Ringen (3) ausgebildet ist und die Baueinheit durch Aufschieben unter radialer Aufweitung auf das Bauteil mit diesem verbindbar ist.

4. Heizeinrichtung nach einem der Ansprüche 1 bis 3, **dadurch gekennzeichnet, dass** das Heizelement (1) in unmontiertem Zustand einen im Wesentlichen zylindrischen Raum einhüllt, dessen Durchmesser (D) 0,5 bis 5 % kleiner als der Durchmesser des zu beheizenden Bauteiles ist.

5. Heizeinrichtung nach Anspruch 4, **dadurch gekennzeichnet, dass** der Innendurchmesser der Ringe (3) in unmontiertem Zustand 0,1 bis 0,5 mm größer als der Durchmesser des vom Heizelement (1) eingehüllten zylindrischen Raumes ist.

6. Heizeinrichtung nach einem der Ansprüche 1 bis 5, **dadurch gekennzeichnet, dass** die Ringe (3) zumindest an ihren einander abgewandten Seiten mit einem Innenkonus (30) ausgebildet sind.

7. Heizeinrichtung nach einem der Ansprüche 1 bis 6, **dadurch gekennzeichnet, dass** die Ringe (3) aus einem Metall, vorzugsweise aus Messing hergestellt sind.

8. Heizeinrichtung nach einem der Ansprüche 1 bis 7, **dadurch gekennzeichnet, dass** das Material der Ringe (3) und/oder des Mantelrohrs (2) eine Zugfestigkeit (Rₘ) bei 500 C von mindestens 650 N/mm² aufweist.

9. Heizeinrichtung nach einem der Ansprüche 1 bis 8, **dadurch gekennzeichnet, dass** das Heizelement (1) zumindest in Teilbereichen, die am rohrförmigen Bauteil anlegbar sind, einen mäanderförmigen Verlauf aufweist.

10. Heizeinrichtung nach einem der Ansprüche 1 bis 9, **dadurch gekennzeichnet, dass** das Heizelement (1) in mindestens zwei diskreten Abschnitten zu Heizzonen (12) geformt ist, die von einer zwischenliegenden unbeheizten Zone (14) beabstandet sind.

11. Heizeinrichtung nach Anspruch 10, **dadurch gekennzeichnet, dass** im Bereich der unbeheizten Zone (14) mindestens eine die benachbarten Heizzonen (12) verbindende Haltestange (15) vorgesehen ist.

12. Heizeinrichtung nach einem der Ansprüche 1 bis 11, **dadurch gekennzeichnet, dass** sie einen Temperatursensor (5) aufweist.

13. Heizeinrichtung nach Anspruch 12, **dadurch gekennzeichnet, dass** der Temperatursensor (5) in das Heizelement (1) integriert ist.

14. Heizeinrichtung nach Anspruch 12, **dadurch gekennzeichnet, dass** der Temperatursensor (5) im Spalt (20) des Mantelrohres (2) angeordnet ist.

15. Heizeinrichtung nach Anspruch 12, **dadurch gekennzeichnet, dass** der Temperatursensor (5) an einem der Ringe (3) befestigt ist.

## Claims

1. Heating device for the exterior heating of a tubular component, comprising a compressed electrical heating element (1), which can be placed on the periphery of the component, and an axially slotted casing tube (2), which can be pushed onto the outside of the component with the interposition of the heating element (1) and by means of which the heating element (1) can be firmly clamped on the component, the casing tube (2) being equipped at its two axial ends with rings (3), **characterised in that** the rings (3) project radially inwardly in relation to the casing tube (2) and are in each case configured with an axial slot (32) and the heating device can be pushed onto the component with radial widening.

2. Heating device according to claim 1, **characterised in that** the casing tube (2) is connected to the rings (3) at the end.

3. Heating device according to claim 1 or 2, **characterised in that** it is configured as a preconnected assembly of a heating element (1), casing tube (2) and the rings (3) and the assembly can be connected to the component by being pushed onto the component with radial widening.

4. Heating device according to any one of claims 1 to 3, **characterised in that** the heating element (1), in the unassembled state, envelopes a substantially cylindrical space, the diameter (D) of which is 0.5 to 5% smaller than the diameter of the component to be heated.

5. Heating device according to claim 4, **characterised in that** the internal diameter of the rings in the unassembled state is 0.1 to 0.5 mm larger than the diameter of the cylindrical space enveloped by the heating element (1).

6. Heating device according to any one of claims 1 to 5, **characterised in that** the rings (3) are configured, at least at their mutually remote sides, with an inner cone (30).

7. Heating device according to any one of claims 1 to 6, **characterised in that** the rings (3) are produced from a metal, preferably from brass.

8. Heating device according to any one of claims 1 to 7, **characterised in that** the material of the rings (3) and/or of the casing tube (2) has a tensile strength (Rₘ) at 500°C of at least 650 N/mm².

9. Heating device according to any one of claims 1 to 8, **characterised in that** the heating element (1), at least in part regions which can be placed on the tubular component, has a meandering course.

10. Heating device according to any one of claims 1 to 9, **characterised in that** the heating element (1) is formed in at least two discrete portions into heating zones (12), which are spaced apart from an intermediate unheated zone (14).

11. Heating device according to claim 10, **characterised in that** at least one holding rod (15) connecting the adjacent heating zones (12) is provided in the region of the unheated zone (14).

12. Heating device according to any one of claims 1 to 11, **characterised in that** it has a temperature sensor (5).

13. Heating device according to claim 12, **characterised in that** the temperature sensor (5) is integrated in the heating element (1).

14. Heating device according to claim 12, **characterised in that** the temperature sensor (5) is arranged in the gap (20) of the casing tube (2).

15. Heating device according to claim 12, **characterised in that** the temperature sensor (5) is fastened to one of the rings (3).

## Revendications

1. Dispositif de chauffage pour le chauffage d'appoint extérieur d'un élément préfabriqué en forme de tuyau, comprenant un élément chauffant (1) électrique, étanche, pouvant être disposé autour de l'élément préfabriqué et un manchon tubulaire (2), pourvu d'une fente, pouvant être glissé axialement sur l'élément préfabriqué, interposé à l'extérieur de l'élément chauffant (1), manchon tubulaire au moyen duquel l'élément chauffant (1) peut être bien tendu sur l'élément préfabriqué, le manchon tubulaire (2) étant équipé d'anneaux (3) à ses deux extrémités axiales, **caractérisé en ce que** les anneaux (3) dépassent de manière radiale, orientés vers l'intérieur, par rapport au manchon tubulaire (2) et sont chacun conçus avec une fente (32) axiale, et que le dispositif de chauffage peut être glissé sur l'élément préfabriqué grâce un élargissement radial.

2. Dispositif de chauffage selon la revendication 1 **caractérisé en ce que** le manchon tubulaire (2) est relié aux anneaux (3) aux extrémités.

3. Dispositif de chauffage selon les revendications 1 ou 2 **caractérisé en ce qu'**il est conçu comme un ensemble pré-assemblé constitué d'un élément chauffant (1), d'un manchon tubulaire (2) et d'anneaux (3) et que l'ensemble pré-assemblé peut être relié à l'élément préfabriqué en le faisant glisser sur celui-ci grâce à un élargissement radial.

4. Dispositif de chauffage selon l'une des revendications 1 à 3 **caractérisé en ce que** l'élément chauffant (1) à l'état non monté développe un espace dans l'ensemble cylindrique dont le diamètre (D) est de 0,5 à 5 % inférieur à celui de l'élément préfabriqué à chauffer.

5. Dispositif de chauffage selon la revendication 4 **caractérisé en ce que** le diamètre intérieur des anneaux (3) à l'état non monté est de 0,1 à 0,5 mm plus grand que le diamètre de l'espace cylindrique constitué de l'élément chauffant (1) enveloppé.

6. Dispositif de chauffage selon l'une des revendications 1 à 5 **caractérisé en ce que** les anneaux (3) sont formés avec au moins un cône intérieur (30) sur leurs faces opposées.

7. Dispositif de chauffage selon l'une des revendications 1 à 6 **caractérisé en ce que** les anneaux (3) sont fabriqués en métal, de préférence en laiton.

8. Dispositif de chauffage selon l'une des revendications 1 à 7 **caractérisé en ce que** le matériau des anneaux (3) et/ou du manchon tubulaire (2) présente une résistance à la traction (Rₘ) d'au minimum 650 N/mm² à 500 C.

9. Dispositif de chauffage selon l'une des revendications 1 à 8 **caractérisé en ce que** l'élément chauffant (1) présente, au moins dans des zones partielles, un parcours en forme de méandres pouvant se plaquer contre l'élément préfabriqué en forme de tuyau.

10. Dispositif de chauffage selon l'une des revendications 1 à 9 **caractérisé en ce que** l'élément chauffant (1) se présente sous forme d'au moins deux portions discrètes de chauffage (12) qui sont espacées entre elles par une zone non chauffée (14).

11. Dispositif de chauffage selon la revendication 10 **caractérisé en ce que** dans le domaine de la zone non chauffée (14) il est prévu au moins une barre de maintien (15) reliant l'une des zones de chauffage (12) voisines.

12. Dispositif de chauffage selon l'une des revendications 1 à 11 **caractérisé en ce qu'**il présente un capteur de température (5).

13. Dispositif de chauffage selon la revendication 12 **caractérisé en ce que** le capteur de température (5) est intégré dans l'élément chauffant (1).

14. Dispositif de chauffage selon la revendication 12 **caractérisé en ce que** le capteur de température (5) est agencé dans la fente (20) du manchon tubulaire (2).

15. Dispositif de chauffage selon la revendication 12 **caractérisé en ce que** le capteur de température (5) est fixé à l'un des anneaux (3).
